Europäisches Patentamt

European Patent Office

Office européen des brevets

(11) Publication number: **0 121 797**
**B1**

(12) **EUROPEAN PATENT SPECIFICATION**

(45) Date of publication of patent specification: **17.01.90**

(21) Application number: **84102611.5**

(22) Date of filing: **09.03.84**

(51) Int. Cl.⁵: **C 04 B 35/80, C 04 B 35/52**

(54) Carbon composite article and method of making same.

(30) Priority: **15.03.83 US 475521**

(43) Date of publication of application:
**17.10.84 Bulletin 84/42**

(45) Publication of the grant of the patent:
**17.01.90 Bulletin 90/03**

(84) Designated Contracting States:
**AT BE CH DE FR GB IT LI LU NL SE**

(56) References cited:
**FR-A-2 401 888**
**US-A-4 275 095**
**US-A-4 397 901**

(73) Proprietor: **Refractory Composites Inc.**
**12220-A Rivera Road**
**Whittier California 90606 (US)**

(72) Inventor: **Warren, James W.**
**24300 Aetna Street**
**Woodland Hills California 91367 (US)**

(74) Representative: **Baillie, Iain Cameron et al**
**c/o Ladas & Parry Isartorplatz 5**
**D-8000 München 2 (DE)**

## Description

### Field of the Invention

The present invention relates generally to fibrous ceramic matrix composite articles and the method of making same. More particularly the invention relates to unique carbon-silicon composite articles for use in high temperature, hostile fluid environment.

### Discussion of the Prior Art

The potential of ceramics as structural materials for advanced engineering materials applications has been recognized for many years. Advantages of ceramics and ceramic matrix composites include the following: high strength/weight ratio; high stiffness/weight ratio; tailorable properties and geometry; high temperature strength; resistant to thermal shock, impact, corrosion/erosion and fatigue.

Experimental attempts to successfully demonstrate ceramic hardware, however, have not been completely successful due to flaw sensitivity, brittleness and catastrophic failure of the materials. In addition, other factors that have impeded utilization of advanced ceramic composites include: lack of proper designs and experience; thermal shock sensitivity; poor reproducibility, reliability; low impact strength; and high cost.

Recent research efforts have improved materials and design methods. However, a more thorough and deeper understanding of their variations and behaviour is urgently required if ceramics are to be successfully utilized in the near term time frame. Unfortunately, the predominance of available ceramic materials only represent solutions looking for problems through substitution rationales rather than attacking their limitations directly. Current flaw sensitive, brittle failure mechanisms will have to be replaced by tough, high fracture energy materials whose failure mode is more forgiving and predictable.

The only presently known methods of achieving practical high performance ceramic material systems is to introduce cohesive elements or barriers to crack propagation into a ceramic composite structure in the form of discrete particles or fibers; in other words, form a ceramic matrix composite. With such materials it is then possible to use an architectural approach to application design/material selection; identified operational requirements can then be matched with state-of-the-art materials and processes. Required work includes establishing specific performance and production criteria, careful design analysis and a goal-oriented, iterative materials development effort.

Start-of-the-art automotive gas turbines presently require an additional 260°C (500°F) above their normal operating temperature to allow for acceleration of the rotating components. The use of ceramic for rotor and power train construction reduces mass and inertia by at least 50%, thereby reducing the acceleration over-temperature requirement to only 121°C (250°F) available for steady state operation. This one-step improvement is equal to turbine operating temperature increases achieved through the past twenty-five years of metallurgical development.

Such potential achievements realistically lie within the state-of-the-art of the technologies involved. However, intrinsic material properties and limitations have to be recognized and utilized within the design goal parameters. Raw materials, fabrication and processing technologies have to be interfaced with the designer and equipment operator to provide goal-oriented materials/component/system development with prototype demonstration providing iterative feedback necessary to assure success.

Typically all material strengths drop off as temperatures increase. Since these rates of decrease, however, are not the same it provides designers with latitude in materials selection. The selection of materials for at operating temperatures above 1093°C (2000°F) is quite limited and even at 1371°C (2500°F) silicon nitride and silicon carbide are on the down scope of their strength curve. On the other hand, carbon and its composites exhibit an equal or increase in strength from room temperature to more than 2204°C (4000°F).

Typical properties of carbon/carbon composites, which are brittle fiber/brittle matrix ceramic systems, are sufficient to meet most identified application requirements. They are tough and somewhat foregiving materials and data shows that although microcracking does occur at load levels below ultimate failure, subsequent loading to equal or lesser stress levels will not propagate these cracks. Fatigue life is almost infinite.

A typical application for structural carbon/carbon composite materials is found in aircraft brakes where the composite provides friction, heat sink and structural capabilities. Carbon/carbon composite brake systems are currently operational on F—14, F—16, Space Shuttle, and Concorde aircraft. Individual wheel sets are also under evaluation in commercial service on all heavy lift aircraft — 747, DC10, L—1011, and Airbus.

### Material Status

In applying the theory of fracture mechanics to the thermal shock resistance of brittle materials, Rossi & Hasselman in their paper entitled "Aplication of Fracture-Mechanics Theory to the Thermal Shock Resistance of Brittle Materials" describe the values of increasing the surface fracture energy of a ceramic through the use of fiber reinforcing. Recent developments in graphite fiber reinforced carbon, silicon/silicon carbide and glass matrix composite systems have demonstrated viability in achieving this increase in surface fracture energy while allowing economical production of high strength intermediate/high temperature hardware that can be tailored to meet application requirements.

Efforts with glass reinforced glass, tantalum reinforced silicon nitride and graphite/silicon carbide reinforced glass have shown that high strength, impact resistant, tough composite components can be readily fabricated. Additional prior art efforts have been shown that fibrous reinforced, net dimension ceramic composites can be produced free of pore sensitivity.

The introduction of tantalum fibers with a silicon nitride matrix was successful in increasing the Charpy impact strength of the composite from one half foot pound to three and one half foot pounds before any cracking occurred. Using graphite fibers in a glass matrix system demonstrated properties approximately equaling those of graphite epoxy at room temperature and even higher strengths at 288°C (550°C).

While it is well known that no chemical bonds exist in carbon/carbon systems, it is interesting to note that brittleness in these ceramic matrix composite systems appears to be a function of the fiber to matrix bond strength. In all cases, poor fiber to matrix bonds produce tough composites while good fiber to matrix bonds result in brittle, flaw sensitive materials.

Graphite fiber reinforced silicon/silicon carbide composite systems offer a unique potential of minimizing, if not overcoming many of the limitations of monolithic ceramics. There are, however, a myriad of approaches which involve fiber type and precursor as well as fiber volume, fabrication technique, thermal and CVD processing parameters and the effect of the related variables that might be used in solving these problems. These approaches are based upon existing experience and manufacturing capabilities in carbon/carbon composite technology presently used for commercial aircraft brakes and a wide variety of thermostructural aerospace applications.

The fiber reinforced composite is also suitable as a substrate for CVD silicon carbide; parts have been coated, recoated and satisfactorily machined with relative ease following coating. Additional applications under investigation for these systems are semiconductor diffusion furnace tubes, advanced non-nuclear power system components, chemical process and fossil fuel power generating equipment and hardware for geothermal systems.

Flexural strengths of up to 120,000 PSI have been reported for carbon/silicon/silicon carbide material and early results with low fiber volume, low strength (approximately 10,000 PSI) radial turbine rotors show promise. A three inch radial turbine wheel with an integral shaft fabricated from a carbone/silicon/silicon carbide composite system was successfully spun at 50,000 RPM and 1093°C (2,000°F). During its seven and one half hours of cyclical operation, seven starts and stops, including two flame-outs were experienced prior to test termination resulting from loss of tip clearance. Tip loss was caused by ingestion of foreign matter which adhered to the shroud and removed 0.79 cm (5/16") of the blade tips while the rotor was operating at speed and temperature.

Uniquely, and most importantly, this impact damage did not shatter the rotor or cause catastrophic failure; the turbine simply lost power due to loss of tip clearance and was shut down normally.

Flaw sensitivity and brittleness are intrinsic limitations of monolithic ceramics which do not appear subject of simple solutions. Because of these limitations, successul utilization of ceramics in structural applications will require a change in the basic failure mechanism of these materials as discussed in previous paragraphs. Flaw sensitive, brittle fracture — typical of monolithic ceramics — results in catastrophic failure such as when a rock hits a pane of glass. Such a failure must be changed to a tough or tearing mechanism where an orderly disruption of individual materials in the system fail on a microstructural basis resulting in no catastrophy such as experienced when hitting a piece of plywood with a hammer. This type of impact resistance and lack of catastrophic failure is typical of most fiber reinforced resin systems and can also be made available in ceramic matrix systems.

Carbon, glass and hybrid carbon/silicon/silicon carbide/silicon nitride composite systems have exhibited substantial improvements in toughness and lack the flaw sensitivity so common in monolithic ceramics. Specific combinations of fibers, matrices and processing must be utilized to meet identified application requirements. Fiber selection, volume fraction and orientation coupled with matrix selection and processing technology can be varied over wide ranges thus providing designers with a degree of freedom to match application requirements that were previously unavailable.

For the reasons previously discussed, great difficulty has been experienced in reproducibility and reliably manufacturing ceramic articles suitable for structural applications. One solution to the prior art difficulties is described in the US patents 4275095 and 4397901 of the present inventor. They comprise a composite article and a method making same, whereby a carbon fibrous substrate including a pyrolytic carbon sheath formed about each fiber of the substrate is coated with a metallic carbide, oxide or nitride over the coated fibers of the substrate, and an impermeable outer protective layer of a metallic carbide, oxide or nitride is formed about the entire periphery of the coated substrate.

The present invention comprises an improvement upon the methods and articles described in said co-pending applications.

As will be appreciated from the discussion which follows, the process of the present invention overcomes the prior art problems of monolithic ceramic flaw sensitivity, brittleness and catastrophic failure and provides a unique, tough, non-flaw sensitive fibrous ceramic matrix composite article which will resist thermal shock/stress and can be reproducibly, reliably and economically fabricated to net dimension.

## Summary of the Invention

It is an object of the present invention to provide a unique composite article adapted for use in highly corrosive, erosive environments comprising a fiberous substrate, a metallic carbide, oxide or nitride compliant coating over the fibers of the substrate and an impermeable metallic carbide, oxide or nitride outer protective layer or seal coat formed about the periphery of the coated substrate.

It is another object of the invention to provide a composite article of the aforementioned character which will substantially maintain its dimensional stability and strength even under severe high temperature oxidizing conditions.

It is another object of the invention to provide a composite article of the class described which is substantially resistant to corrosion and erosion by high temperature, hostile gas, particulate and fluid environments.

It is an important object of the present invention to provide a composite article of the character described in the preceding paragraphs in which the aforementioned metallic carbide, oxide, boride or nitride coating is controllably applied to the carbon fibrous substrate in a manner such that any mechanical stresses built up in the substrate due to mismatches in coefficients of thermal expansion between the fiberous substrate and the coatings are effectively accomodated or relieved.

It is another particularly important object of the present invention to provide a structural composite article of the character as described in the preceding paragraphs in which the aforementioned metallic carbide, oxide, boride or nitride coating is controllably applied to the carbon fibrous substrate in a manner such that any flaws or defects other than gross delaminations or inclusions will not initiate nor contribute to the propagation of microcracking which results in ultimate part failure; the part will have high fracture toughness and not subject to brittle failure typical of monolithic ceramics i.e. glass; and that ultimate failure is a tearing non-catastrophic failure where an orderly disruption of individual materials in the system fail on a progressive microstructural basis.

It is a further important object of the present invention to provide a process for making composite articles of the character described in the preceding paragraphs in which the metallic carbide, oxide, boride or nitride coating is controllably applied to the carbon fibrous substrate in a manner such that the individual fibers of the substrate are free to move relative to the applied coating.

More particularly, it is an object of the invention to provide a process as described in the previous paragraph in which a pyrolytic carbon coating is first deposited by chemical vapor deposition (CVD) about each of the fibers in such a manner that each fiber is substantially encased in a non-adherent pyrolytic carbon casing and then a metallic carbide, oxide or nitride coating is applied over the coating fibers in such a manner that the fibers remain freely movable relative to the applied coatings.

It is another object of the invention to provide a composite article as described in the previous paragraph in which each fiber of the substrate is encased in a uniform CVD type carbon casing to promote superior load transfer from fiber to fiber when the article is stressed. This CVD carbon casing also provides a mechanical interface for increasing the surface fracture energy of the composite structure thus resulting substantial toughness and flaw resistance.

It is still another object of the invention to provide a process of the aforementioned character in which, following the coating of the fibers, an impermeable carbide, nitride, boride or oxide coating is controllably formed about the fibers and entire periphery of the substrate to seal it against hostile environments.

In summary, these and other objects of the invention are realized by a composite article produced by a method comprising the steps of forming a starting substrate of selected fiber/pore volume fractions and pore structure from a multiplicity of high temperature fibers such as carbon selected from a group consisting of pyrolyzed wool, rayon, polyacrylonitrile and pitch fibers; suspending the starting substrate within a first controlled environment; forming an intermediate substrate by heating the starting substrate to a temperature of between approximately 816°C (1500°F) and approximately 1204°C (2200°F) while exposing the starting substrate to a hydrocarbon gas to form a uniform layer of pyrolytic carbon about each of the fibers in the starting substrate; removing the intermediate substrate from said first controlled environment and forming it into a shaped substrate having the approximate shape desired to the end product composite article; supporting the shaped substrate in a second controlled environment while heating it to a temperature of between approximately 732°C (1350°F) and approximately 1371°C (2500°F) while exposing the intermediate substrate to a gas containing carbon and silicon such as trichlorosilane to form a uniform layer of CVD silicon carbide about each of the fibers/fiber bundles in either the starting or intermediate substrate.

## Brief Description of the Drawings

Figure 1 is a side elevational view of one form of controlled environment in which the substrate may be infiltrated and coated.

Figure 2 is a generally diagrammatic view of a substrate showing diagrammatically the locations within the substrate at which the specimens shown in Figures 3 and 4 were taken.

Figure 3 is a reproduction of a photomicrograph (2000×) taken at the edge of the substrate showing the appearance of the coated fibrous substrate at an intermediate density level and prior to the application of the final seal coat.

Figure 4 is similar to Figure 3 showing a reproduction of a photomicrograph (2000×) taken

at the center of the substrate and taken at the same intermediate processing stage.

Discussion of the Preferred Embodiments

Before proceeding with a detailed discussion of the preferred embodiments of the present invention, the following definitions of the technical terms used herein are presented to facilitate a clear understanding of the nature and scope of the invention:

1. Composite product — a product comprising a carbon, graphite or ceramic substrate and one or more metallic carbide, oxide, boride or nitride coatings within or over the substrate material.

2. Starting or basic substrate — as used herein, the starting substrate or interim product shape before the application of a metallic coating.

3. Carbon fibrous substrate — a starting substrate comprising carbon material in fibrous form.

4. Fiber volume — volume % of carbon fibers present in the given substrate.

5. Non-woven — coherent fibrous material formed without interlacing of threads, such as batting or felt.

6. Woven — fabric formed by interlacing warp and filling threads on a loom, or the like.

7. Ceramic — metallic or other inorganic oxides, carbides, borides or nitrides generally classed as glass-forming oxides.

8. Pyrolytic or "CVD" material — a material made from the thermal decomposition of a gas containing the material.

Stated in simple terms, the composite article of the invention consists of a two or more phase system comprising a basic substrate of carbon fibrous and/or ceramic materials, a metallic carbide, oxide, boride or nitride layer over the fibers and matrix of the substrate and an impermeable carbide, oxide, boride or nitride protective layer formed over the entire periphery of the infiltrated substrate. An important feature of the article is the absence of a strong bond between the fibers and the matrix system to reduce flaw sensitivity, increase surface fracture energy (toughness) and to accommodate the mismatch in expansion coefficient between the fibrous substrate and the carbide, oxide, boride or nitride protective and seal coat layers.

The articles of the invention are well suited for a variety of applications including turbine rotors, turbine augmentor divergent flaps and Diesel engine pre-combustion chambers made up of a carbon fiber, carbon (resin and/or pitch char and/or CVD deposit) matrix component which has been peformed to a selected component net geometry. Each of the substrate fibers is encased in a non-adherent, uniform, CVD type carbon case so as to promote good load transfer from fiber to fiber when the article is stressed. This also provides a mechanical interface for increasing the surface fraction energy of the composite structure, thus resulting in greater toughness and flaw resistance.

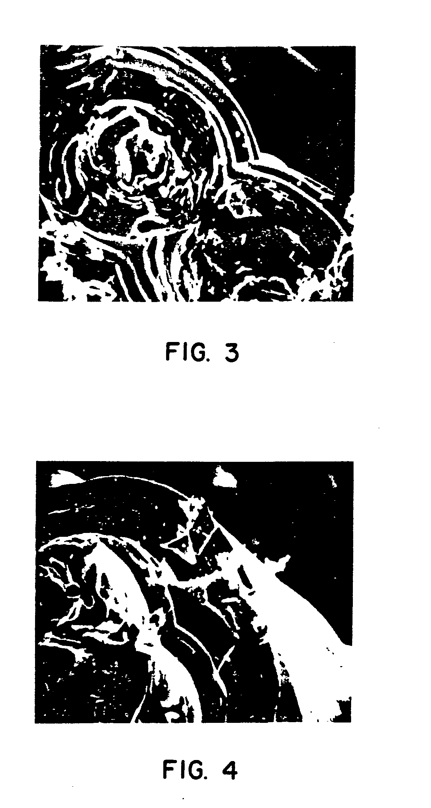

Because carbon/carbon composites actively react with oxygen when heated to temperatures in excess of 300°C, the fibers, matrix and interstices of the article are coated with a metallic carbide, oxide, boride or nitride to form a continuous CVD carbide, oxide, boride or nitride case around each of the fibers. This treatment effectively imparts increased load transfer from fiber to fiber and protects the interstices of the substrate from oxidation. The lack of bond between the fiber and the carbon and the carbide, oxide, boride or nitride case, however, allows the carbon fibers and multi-phase matrix case to move independent of one another on a microscopic scale, thus overcoming flaw sensitivity and catastrophic failure, increasing surface fracture energy (toughness) and providing a compliance mechanism that effectively reduces thermally induced mechanical stresses. The appearance of the coated fibers is clearly illustrated in Figures 3 and 4 of the drawings.

The article of this interim state with its substrate and concentric layers of carbon and/or metal carbide, oxide, boride or nitride remains quite porous. Therefore, to increase strength and to provide complete protection for use in high temperature oxidizing environments, subsequent infiltration of the porous substrate is controlled to deposit a thicker CVD metallic carbide, oxide, boride or nitride on the more deeply located fibers than on those near the surface. This effectively overcomes decreasing density gradients currently experienced with pyrolytic carbon infiltration. Following this an impermeable CVD metal carbide, oxide, boride or nitride is applied to seal the surface with a material whose expansion coefficient is compatible with that of the infiltration coating. The final article thus formed is remarkably stable and highly corrosion resistant even in extreme environments.

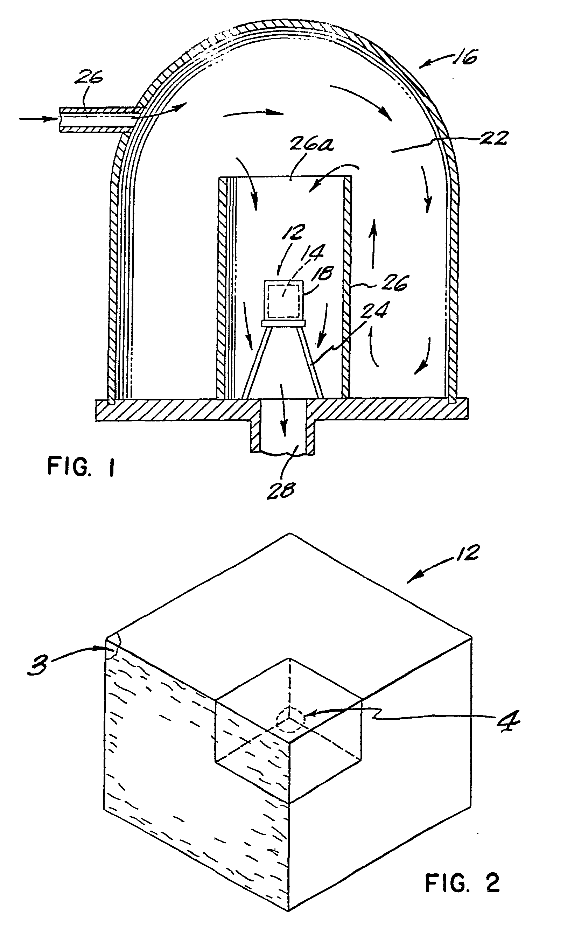

Referring briefly to Figure 1 of the drawings, one form of article made by the method of the invention is there illustrated. This article 12, which is a test specimen, comprises a central section 14 made up of carbon felt, chopped fiber or macerated material. In Figure 1 the test specimen is shown positioned within a processing appearance 16, the details which will presently be described.

Surrounding the central section 14 is a material layer 18 comprising a woven carbon fibrous material such as carbon or graphite cloth commercially available from The Union Carbide Company and others.

In a manner which will be described in greater detail in the paragraphs which follow, the individual fibers of the central section 14 material layer 18 are coated with a layer, or sheath, of CVD carbon and then with a layer of metal carbide oxide, boride or nitride. Finally, the entire surface of the test specimen is sealed with an outer layer of CVD metal carbide, oxide, boride or nitride which extends about the entire periphery of the article.

Referring to Figures 2 through 4, the character of the coated substrate material 14 and 18 is there vividly illustrated. Figure 3 is a reproduction of a photomicrograph of the coated fibrous material at 2000 times magnification. In this Figure the fiber, the CVD coating about the fiber and the metal coating superimposed thereupon, are clearly visible. Also in this Figure the ends of the individual fibers can clearly be seen protruding from the CVD carbon coating and the metal coating, in this case, metal carbide. A coating of metal oxide, boride or nitride would have a similar appearance. As will be appreciated from the examples which follow, the metal coating, be it an oxide, boride, nitride or a carbide, is applied to the fibers in a manner such that any mechanical stresses built up in the substrate due to a mismatch between the coefficients of thermal expansion of the fibrous substrate and the coating are effectively accommodated. This important feature of the present invention is clearly illustrated in Figures 3 and 4 of the drawings.

It is to be appreciated that the article shown in Figures 2 through 4 of the drawings is merely exemplary of the type of article which can be made in accordance with the method of the present invention. Highly useful products of the invention include turbine rotors, diesel engine combustion chambers, and numerous specially designed products for nuclear and aerospace applications.

As will be clearly illustrated by the examples which follow, the method of the invention stated in simple terms comprises the following steps: First, a multiplicity of high temperature fibers such as carbon fibers are assembled into a basic or starting susbtrate. This starting substrate is then heated to about 538°C (1000°F) to about 1650°C (3000°F) in a controlled environment to thermally stabilize the substrate. Next the starting substrate is placed in a first controlled environment, heated to between about 816°C (1500°F) and about 2315°C (4200°F) and exposed to a carbonaceous gas such as methane. During this step a uniform layer of CVD carbon is deposited about each of the fibers of the substrate. Following this step the interim substrate thus formed is machined or otherwise formed into the approximate shape of the end product. Next the shaped substrate formed in the previously described step is placed in a second controlled environment and heated to about 732°C (1350°F) to about 1371°C (2500°F). The heated shaped substrate is then exposed to a gas containing carbon and a metal, for example, silicon such as trichlorosilane for a period of time sufficient to form a uniform layer of CVD silicon carbide about each of the fibers/fiber bundles in either the starting or intermediate substrate. Other metals which can be deposited through chemical vapor deposition can also be used to form a metal coating selected from a group consisting of metal carbide, metal oxide, metal boride and metal nitride. Next the article thus formed is once again heated to a temperature of about 982°C (1800°F) to about 1760°C (3200°F) in a third controlled environment and exposed to a gas containing carbon and silicon such as trichlorosilane. This step forms a uniform CVD seal coating of silicon carbide of controllable porosity about the entire periphery of the article.

Example No. 2

Using a macerated material having a multiplicity of chopped pitch fibers a starting substrate which exhibited a fiber volume of about 60% was also processed as described in Example No. 1 save that silicon tetrachloride and methane were used in the diffusion and final coating steps.

As previously discussed herein, one form of the method of the invention involves encasing the substrate fibers in a CVD type carbon case. This encasement tends to promote good load transfer from fiber to fiber.

It has been found that good load transfer characteristics can also be achieved by encasing the substrate fibers in one or more casings of silicon carbide. This can be accomplished by controllably flowing a gas such as dimethyldichloride or dimethyltrichlorosiline interstitially of the thermally stabilized substrate so as to form a uniform layer of pyrolytic silicon carbide about each of the fibers within the substrate.

It has also been found that for certain applications the starting substrate can advantageously be formed from a slurry comprising a granular material such as silicon carbide or graphite. For other applications the slurry can comprise such a granular material intermixed with short lengths of high temperature resistant fibers selected from the group consisting of ceramic, pyrolyzed wool, rayon, polyacrylonitrile and pitch. The slurry may also include a suitable carbonaceous binder such as petroleum pitch, coal tar pitch, furan resins and phenolic resins.

The examples which follow illustrate the various forms of the method of the invention discussed in the immediately preceding paragraphs.

Example No. 3

Short lengths of rayon fibers were mixed with a suitable binder such as phenolic resin to form a slurry. The slurry was then vacuum formed into a formed substrate of the desired size and shape. The starting substrate was then produced by drying the formed substrate and carbonizing it at approximately 649°C (1200°C). Next the starting substrate, along with several control specimens, was heated to about 538°C (1000°F) to about 1250°C (2300°F) for a period of time sufficient to thermally stabilize the substrate. The thermally stabilized substrate was then placed into a first vacuum-pressure controlled environment, which in this case was a vacuum chemical vapor deposition furnace of conventional design. The temperature of the substrate was then raised to about 871°—1204°C (1600—2200°F) while a vacuum of on the order of 0.1 to 0.6 atmospheres was maintained within the deposition chamber. A secondary, or intermediate, substrate was formed by controllably flowing methylchlorosilane gas interstitially of the substrate for a period of time of about 20 hours. Through this technique a uniform layer of pyrolytic silicon carbide was deposited about each of the fibers within the substrate to form an intermediate substrate having a density of on the order of 1.0 gm/cc.

Following the aforementioned infiltration step, the intermediate substrate was cooled, removed from the vacuum furnace and transferred to a machining area. In the machining area the intermediate substrate was machined in a conventional manner to form a shaped substrate of a desired configuration.

Following the machining step, the shaped substrate was supported in a vacuum chamber, or second controlled environment as shown in Figure 1. The shaped substrate was then heated to about 871°—1204°C (1600—2200°F) in a mild vacuum. With the substrate at this elevated temperature a gas containing carbon and silicon was allowed to fill the chamber 22 to between 0.1 and .6 atmospheres. Following this back fill with a carbon and silicon containing gas the pressure of the chamber was then reduced to the original mild vacuum and this process repeated for a period of time of about fifty hours.

Next the coated article thus formed was cooled, removed from the vacuum chamber and transferred to an inspection area. This inspection revealed that no strong bond was found to exist between the carbon fibers and the silicon carbide coating formed by coating the starting and shaped substrates with the silicon carbide. In all cases no strong chemical or diffusion bonds were observed to exist between the fiber and/or matrix system. Accordingly, the fibers were free to move at a different rate from the carbon and/or silicon carbide matrix systems. This highly novel and important feature of the diffusion coated article of the present invention effectively minimizes any residual stresses tending to occur within the article. Furthermore, it provides an effective matrix system which permits the fibers to carry the load and be transferred from fiber to fiber through a continuous matrix irrespective of voids or other incipient flaws created by fiber spacing, crossover discontinuities or inclusions.

Following dimensional inspection of the infiltrated article, it was placed into a third controlled environment, or vacuum chemical vapor deposition furnace. Once in place within the CVD apparatus, the article was heated to about 982°C (1800°F) and a gas containing demethyldichlorosilane was controllably passed over and about the article. Due to the porous nature of the starting or pyrolytic silicon carbide coated article formed by the novel method of the present invention, a uniform coating of CVD silicon carbide was deposited over the coated fibers of the article. This step provided an impermeable coating of silicon carbide over the fibers and interstices of the entire starting or intermediate substrate rendering it virtually impervious to corrosion and erosion caused by high temperatures and exposure to hostile gas and fluid environments. Subsequent testing and evaluation of the two phase CVD layer type coated article thus formed under stable and remarkably resistant to flow sensitivity, brittleness, catastrophic failure or thermally induced cracking, crazing or spalling.

### Example No. 4

In this example the slurry used to form the starting substrate comprised short lengths of PAN fibers intermixed with silicon carbide in granular form. The slurry was vacuum formed into the desired shape and was then dried and carbonized at between 1200 and 1500°C.

The starting substrate thus formed was placed into a vacuum furnace and the fibers thereof coated with pyrolytic silicon carbide in the manner described in Example No. 3. However, dimethyldichlorosilane was used in lieu of methyltrichlorosilane as the silicon bearing gas.

After infiltration the substrate was removed from the CVD furnace and was machined into a shaped substrate in the manner of Example No. 3.

Following machining, the intermediate substrate was heated to about 872°C (1800°F) in a second controlled environment maintained at slightly greater than atmospheric pressure and a CVD silicon carbide coating was deposited on the pyrolytic silicon carbide coated fibers.

The silicon coated article thus formed was dimensionally inspected and returned to the vacuum furnace wherein it was once again heated to about 1038°C (1900°F). While being maintained at this elevated temperature a gas containing carbon and silicon, as for example trimethylchlorosilane was passed over and about the article to deposit a uniform coating of silicon carbide over the coated fibers and about the periphery of the article. The article thus formed was observed to have a small but measurable degree of open porosity.

As a final step the metal coated article was sealed by introducing a metal oxide into the pores of the metal coated article. While the metal oxide in this example was in the form of fine particulate matter, the final coating could be accomplished by various methods including CVD, liquid spray or immersion

### Example No. 5

In this example the starting substrate was constructed by molding granular graphite into a desired size and shape. The porous substrate thus formed was then carbonized and placed into a vacuum furnace where it was infiltrated with methylchlorosilane in accordance with the method of Example No. 3. In this way, a pyrolytic silicon carbide was deposited in and around the substrate to form an intermediate substrate.

Following the machining of the intermediate substrate processing of the part was completed in the same manner set forth in Example No. 3.

### Example No. 6

In this Example, a carbonized rayon cloth made up of interwoven carbon fibers was cut into circular shaped pieces having a diameter of about 4 inches. A disc shaped starting substrate was constructed by stacking a plurality of the circular shaped pieces onto a base plate of a compression fixture. Each layer of cloth was rotated slightly with respect to the preceding layer and a top plate was placed over the assembly and bolted to the base plate. The assembly was then compressed to bring the cloth layers into intimate contact. The starting substrate thus formed exhibited a fiber volume of about 30 to 35% and a fiber density of about 1.5 gm/cc.

Next the starting substrate, along with the compression fixture, was placed into a CVD vacuum furnace and in the manner previously described, pyrolytic silicon carbide was uniformly deposited over each of the fibers comprising the disc shaped starting substrate.

The intermediate substrate thus formed was removed from the compression fixture and machined to form a disc about 3½ inches in diameter and about 2.54 cm (1 inch) thick.

Following machining, the substrate was returned to the CVD vacuum furnace and heated to a temperature of about 871°—1204°C (1600—2200°F). A gas containing methyltrichlorosilane was repeatedly passed over and about the shaped substrate for a period of time of about 50 hours to form a diffusion coated article in which a silicon carbide coating was formed about each of the coated fibers of the intermediate substrate. The temperature of the substrate was intermittently raised to about 1482°C (2700°F) to effect dimensional stability between the silicon carbide carbon fiber and the substrate.

After undergoing another dimensional inspection, the still porous, diffusion coated article was returned to the vacuum furnace for final coating with methyltrichlorosilane in the manner described in Example No. 3. Once again the two phase coated article thus formed exhibited remarkable stability and durability during severe environmental testing.

In summary, one basic method of the invention capable of being practiced by those skilled in the art after a study of the disclosures of Examples 3 through 6 comprises the steps of forming a starting substrate from a multiplicity of high temperature resistant fibers selected from a group consisting of ceramic, pyrolyzed wool, rayon, polyacrylonitrile and pitch fibers; exposing the starting substrate to an elevated temperature of about 811°—1204°C (1600—2200°F) for a period of time sufficient to thermally stabilize the substrate; suspending the starting substrate within a first vacuum-pressure controlled environment; heating the starting substrate to a temperature of between approximately 732°C (1350°F) and approximately 1371°C (2500°F); and forming a coated article having a controlled degree of open porosity about the fibers of the starting substrate through chemical vapor deposition, a metal capable of reacting with carbon, oxygen, boron, silicon and nitrogen to form a carbide, oxide, boride, silicide and nitride.

By applying the silicon carbide coating to the fibers of the substrate in the manner described in the examples the fibers are uniquely free to move relative to the coatings. Accordingly the carbon-silicon composite article thus produced exhibits a high degree of dimensional stability and strength even under severe high temperature oxidizing conditions.

Having now described the invention in detail in accordance with the requirements of the patent statutes, those skilled in this art will have no difficulty in making changes and modifications in the individual parts or their relative assembly in order to meet specific requirements or conditions. Such changes and modifications may be made without departing from the scope and spirit of the invention, as set forth in the following claims.

## Claims

1. In combination,
   a substrate formed from a plurality of discrete elements defining a porous relationship, the substrate having anisotropic properties and having a first coefficient of thermal expansion, and
   a matrix disposed directly on the substrate and having a second coefficient of thermal expansion different from the first coefficient of thermal expansion and freely movable relative to the substrate to accommodate the different coefficients of thermal expansion of the substrate and the matrix,
   the matrix being formed from a first element having refractory properties and a second element chemically bound to the first element.

2. In a combination as set forth in claim 1, the thickness of the matrix being greater at increased depths of the discrete elements in the substrate than at decreased depths of the discrete elements in the substrate.

3. The combination set forth in either claim 1 or claim 2 wherein the discrete elements in the plurality define interstices and the matrix is disposed in such interstices.

4. The combination set forth in any one of claims 1—3, wherein the matrix is permeable and an impermeable layer is disposed on the matrix.

5. The combination set forth in any of claims 1—4, wherein
   the discrete elements of the substrate are formed from materials containing carbon, graphite or ceramic and
   the matrix is formed from a material comprising a metallic carbide, oxide, boride or nitride.

6. The combination set forth in any of claims 1—5, wherein the substrate is formed from a material selected from the group consisting of ceramic, pyrolized wool, rayon, polyacrylonitrile and pitch fibers.

7. The combination set forth in any of claims 1—6, wherein a material selected from a group consisting of granular silicon carbide and granular graphite is mixed with the other materials in the substrate.

8. A method of forming a refractory composite material, including the steps of:
   providing a substrate having a first coefficient of thermal expansion and formed from a plurality of discrete elements and having porous characteristics,

disposing the substrate in a particular shape, and

depositing directly on the substrate a matrix formed from a material having a second coefficient of thermal expansion different from the first coefficient of thermal expansion and defining a matrix freely movable relative to the substrate, the matrix including a first element having refractory properties and a second element chemically bound to the first element.

9. A method as set forth in claim 8 wherein the matrix is formed by chemical vapor deposition.

10. A method as set forth in claim 9 wherein

the chemical vapor deposition is provided with permeable characteristics and

a chemical vapor deposition of an impermeable material is produced on the permeable matrix.

11. A method as set forth in any one of claims 8, 9 or 10, wherein the matrix is formed from a material comprising a metallic carbide, oxide, boride or nitride.

12. A method as set forth in any of claims 8—11, wherein the matrix is formed from a material selected from a group consisting of silicon carbide, silicon nitride, silicon oxide.

13. A method as set forth in any of claims 8—12, wherein the impermeable layer is formed from a material selected from the group consisting of silicon carbide, silicon nitride and silicon oxide.

14. The method set forth in any of claims 8—13, wherein the chemical vapor deposition is obtained from a material selected from the group consisting of methyltrichlorosilane, dimethyl dichlorosilane, trimethylchlorosilane, dichlorosilane, silicon tetrachloride, silicon dichloride, silicon tetrabromide, tribromosilane, dibromosilane and silicon dibromide.

15. The method set forth in any of claims 8—14, wherein the substrate is heated before the matrix is deposited on the substrate by chemical vapor deposition.

16. A method as set forth in any of claims 8—15, wherein the substrate is shaped before the matrix is applied to the substrate.

17. A method as set forth in any of claims 8—16, wherein the discrete elements constitute fibers disposed in an anisotropic relationship.

18. A method as set forth in any of claims 8—17, wherein

the substrate is initially heated to a temperature of about 538°C to 982°C for a period of time sufficient to stabilize the substrate thermally and

the substrate is therafter heated to a temperature between approximately 816°C and 2,316°C during the formation of the matrix by the chemical vapor deposition.

19. A method as set forth in any of claims 8—18, wherein the combination of the substrate and the matrix are heated to a temperature between approximately 982°C and 1,760°C during the formation of the impermeable layer on the matrix.

20. A method as set forth in any of claims 8—19, wherein the discrete elements are formed into a substrate having a fiber volume of between about five percent (5%) and about sixty five percent (65%) relative to the volume of the substrate.

21. A method as set forth in any of claims 8—20, wherein the substrate is shaped at a temperature between about 732°C and 1,371°C before the matrix is deposited on the substrate.

## Patentansprüche

1. Zusammensetzung, umfassend

ein Substrat, welches aufgebaut ist aus einer Vielfalt vereinzelter Grundbestandteile, die einen porösen Zusammenhang bilden, wobei das Substrat anisotrope Eigenschaften aufweist und einen ersten Koeffizienten für die thermische Ausdehnung hat, sowie

eine auf dem Substrat unmittelbar aufgebrachte Matrix, welche einen vom ersten thermischen Ausdehnungskoeffizienten verschiedenen zweiten Koeffizienten für die thermische Ausdehnung hat und welche in Bezug auf das Substrat frei beweglich ist, um die verschiedenen Koeffizienten für die thermische Ausdehnung von Substrat und Matrix auf einander abzustimmen,

wobei die Matrix aus einem ersten Grundbestandteil mit feuerbeständigen Eigenschaften und einem zweiten, chemisch an den ersten Grundbestandteil gebundenen, Grundbestandteil aufgebaut ist.

2. Zusammensetzung gemäß Anspruch 1, in der die Dicke der Matrix bei den tiefer gelegenen vereinzelten Grundbestandteilen im Substrat größer ist als bei den weniger tief gelegenen vereinzelten Grundbestandteilen im Substrat.

3. Zusammensetzung gemäß Anspruch 1 oder Anspruch 2, in der die in der Vielfalt befindlichen vereinzelten Grundbestandteile Zwischenräume bilden und in der die Matrix in solche Zwischenräume eingebracht ist.

4. Zusammensetzung gemäß jedem der Ansprüche 1 bis 3, in der die Matrix durchlässig ist und auf die Matrix eine undurchlässige Schicht aufgebracht ist.

5. Zusammensetzung gemäß jedem der Ansprüche 1 bis 4, in der die einzelnen Grundbestandteile des Substrates aus Materialien aufgebaut sind, welche Kohlenstoff, Graphit oder Keramik enthalten, und in der die Matrix aus einem Material aufgebaut ist, welches ein Metallcarbid, -oxid, -borid oder -nitrid umfaßt.

6. Zusammensetzung gemäß jedem der Ansprüche 1 bis 5, in der das Substrat aus einem Material aufgebaut ist, welches aus der Gruppe von Keramik, pyrolysierter Wolle, Kunstseide, Polyacrylnitril und Pechfaser ausgewählt ist.

7. Zusammensetzung gemäß jedem der Ansprüche 1 bis 6, in der ein Material aus der Gruppe von gekörntem Siliziumcarbid und gekörntem Graphit mit den anderen Materialien im Substrat vermischt ist.

8. Verfahren zur Herstellung eines feuerfesten zusammengesetzten Materials, das folgende Schritte einschließt:

Es wird ein Substrat bereitgestellt, welches einen ersten Koeffizienten für die thermische Ausdehnung hat, aus einer Vielfalt einzelner Grundbestandteile aufgebaut ist und poröse Eigenschaften hat,

man bringt das Substrat in eine bestimmte Form, und

man lagert unmittelbar auf das Substrat eine Matrix ab, welche aus einem Material aufgebaut ist, welches einen zweiten vom ersten thermischen Ausdehnungskoeffizienten verschiedenen Koeffizienten für die thermischen Ausdehnung hat und welches eine in bezug auf das Substrat frei bewegliche Matrix bildet, wobei die Matrix einen ersten Grundbestandteil mit feuerbeständigen Eigenschaften und einen zweiten an den ersten Grundbestandteil chemisch gebundenen Grundbestandteil einschließt.

9. Verfahren gemäß Anspruch 8, in welchem die Matrix durch chemische Dampfphasenablagerung gebildet wird.

10. Verfahren gemäß Anspruch 9, in welchem der chemisch aufgedampfte Niederschlag durchlässige Eigenschaften aufweist, und in dem auf der durchlässigen Matrix durch chemische Dampfphasenablagerung ein Niederschlag aus undurchlässigem Material erzeugt wird.

11. Verfahren gemäß jedem der Ansprüche 8, 9 oder 10, in welchem die Matrix aus einem Material aufgebaut ist, welches ein Metallcarbid, -oxid, -borid oder -nitrid umfaßt.

12. Verfahren nach jedem der Ansprüche 8 bis 11, in welchem die Matrix aus einem Material ausgebaut ist, welches aus einer Gruppe von Siliziumcarbid, Siliziumnitrid, Siliziumoxid ausgewählt ist.

13. Verfahren gemäß jedem der Ansprüche 8 bis 12, in welchem die undurchlässige Schicht aus einem Material aufgebaut ist, welches aus der Gruppe von Siliziumcarbid, Siliziumnitrid und Siliziumoxid ausgewählt ist.

14. Verfahren nach jedem der Ansprüche 8 bis 13, in welchem die chemische Dampfphasenablagerung mittels eines Materials bewerkstelligt wird, welches aus der Gruppe von Methyltrichlorsilan, Dimethyldichlorsilan, Trimethylchlorsilan, Dichlorsilan, Siliziumtetrachlorid, Siliziumdichlorid, Siliziumtetrabromid, Tribromsilan, Dibromsilan und Siliziumdibromid ausgewählt ist.

15. Verfahren nach jedem der Ansprüche 8 bis 14, in welchem das Substrat erhitzt wird, bevor die Matrix durch chemische Dampfphasenablagerung auf dem Substrat abgelagert wird.

16. Verfahren nach jedem der Ansprüche 8 bis 15, in welchem das Substrat eine Form erhält, bevor die Matrix auf das Substrat gebracht wird.

17. Verfahren nach jedem der Ansprüche 8 bis 16, in welchem die vereinzelten Grundbestandteile aus Fasern bestehen, welche zueinander in anisotroper Beziehung stehen.

18. Verfahren nach jedem der Ansprüche 8 bis 17, in welchem das Substrat anfangs während einer für die thermische Stabilisierung des Substrats ausreichenden Zeitdauer auf eine Temperatur von etwa 538°C bis 982°C erhitzt wird,

und anschließend das Substrat während der Ausbildung der Matrix durch die chemische Dampfphasenablagerung auf eine Temperatur von zwischen annähernd 816°C und 2316°C erhitzt wird.

19. Verfahren nach jedem der Ansprüche 8 bis 18, in welchem die Zusammensetzung aus dem Substrat und der Matrix während der Ausbildung der undurchlässigen Schicht auf der Matrix auf eine Temperatur zwischen annähernd 982°C und 1760°C erhitzt wird.

20. Verfahren gemäß jedem der Ansprüche 8 bis 19, in welchem die einzelnen Grundbestandteile in ein Substrat überführt werden, welches ein Faservolumen von zwischen etwa 5 Prozent (5%) und etwa 65 Prozent (65%), bezogen auf das Substratvolumen, aufweist.

21. Verfahren gemäß jedem der Ansprüche 8 bis 20, in welchem das Substrat bei einer Temperatur zwischen etwa 732°C und 1371°C geformt wird, bevor die Matrix auf dem Substrat abgelagert wird.

## Revendications

1. En combinaison,

un substrat formé d'une pluralité d'éléments discrets définissant une relation poreuse, le substrat ayant des propriétés anisotropes et ayant un premier coefficient de dilatation thermique, et

une matrice disposée directement sur le substrat et ayant un second coefficient de dilatation thermique différent du premier coefficient de dilatation thermique et librement déplaçable par rapport au substrat pour rattraper les différences de coefficients de dilatation thermique du substrat et de la matrice,

la matrice étant formée à partir d'un premier élément ayant des propriétés réfractaires et d'un second élément lié chimiquement au premier élément.

2. Dans une combinaison selon la revendication 1, l'épaisseur de la matrice est plus grande à des profondeurs plus fortes des éléments discrets dans le substrat qu'à des profondeurs plus faibles des éléments discrets dans le substrat.

3. La combinaison selon la revendication 1 ou 2, selon laquelle les éléments discrets dans la pluralité définissent des interstices et la matrice est disposée dans ces interstices.

4. La combinaison selon l'une quelconque des revendications 1 à 3, selon laquelle la matrice est perméable et une couche imperméable est disposée sur la matrice.

5. La combinaison selon l'une quelconque des revendications 1—4, selon laquelle les éléments discrets du substrat sont formés à partir de matériaux contenant du carbone, du graphite ou de la céramique et la matrice est formée à partir d'un matériau comprenant un groupe métallique constitué de carbure, d'oxyde, de borure ou de nitrure.

6. La combinaison selon l'une quelconque des revendications 1—5, selon laquelle le substrat est formé à partir d'un matériau choisi dans le groupe comprenant la céramique, la laine pyrolisée, la rayonne, le polyacrylonitrile et les fibres de brai.

7. La combinaison selon l'une quelconque des revendications 1—6, selon laquelle un matériau choisi dans le groupe comprenant du carbure de silicium granulaire et du graphite granulaire est mélangé avec les autres matériaux dans le substrat.

8. Un procédé de formation d'un matériau composite réfractaire incluant les étapes suivantes:

provision d'un substrat ayant un premier coefficient de dilatation thermique et formé à partir d'une pluralité d'éléments discrets et ayant des caractéristiques poreuses,

disposition du substrat dans une forme particulière, et

dépôt directement sur le substrat d'une matrice formée à partir d'un matériau ayant un second coefficient de dilatation thermique différent du premier coefficient de dilatation thermique et définissant une matrice librement déplaçable par rapport au substrat, la matrice incluant un premier élément ayant des propriétés réfractaires et un second élément lié chimiquement au premier élément.

9. Un procédé selon la revendication 8, selon laquelle la matrice est formée par dépôt de vapeur chimique.

10. Un procédé selon la revendication 9, selon laquelle

le dépôt de vapeur chimique est prévu avec des caracteristiques perméables et

un dépôt de vapeur chimique d'un matériau imperméable est produit sur la matrice perméable.

11. Un procédé selon l'une quelconque des revendications 8, 9 et 10, selon laquelle la matrice est formée d'un matériau comprenant un groupe métallique constitué de carbure, d'oxyde, de borure ou de nitrure.

12. Un procédé selon l'une quelconque des revendications 8 à 11, selon laquelle la matrice est formée à partir d'un matériau choisi dans le groupe comprenant le carbure de silicium, le nitrure de silicium et l'oxyde de silicium.

13. Un procédé selon l'une quelconque des revendications 8 à 12, selon laquelle la couche imperméable est formée à partir d'un matériau choisi dans le groupe comprenant le carbure de silicium, le nitrure de silicium et l'oxyde de silicium.

14. Le procédé selon l'une quelconque des revendications 8 à 13, selon laquelle le dépôt de vapeur chimique est obtenu à partir d'un matériau choisi dans le groupe comprenant le méthyltrichlorosilane, le diméthyldichlorosilane, le triméthylchlorosilane, le dichlorosilane, le tétrachlorure de silicium, le dichlorure de silicium, le tétrabromure de silicium, le tribromosilane, le dibromosilane et le dibromure de silicium.

15. Le procédé selon l'une quelconque des revendications 8 à 14, selon laquelle le substrat est chauffé avant le dépôt de la matrice sur le substrat par dépôt de vapeur chimique.

16. Un procédé selon l'une quelconque des revendications 8 à 15, selon laquelle le substrat est façonné avant l'application de la matrice au substrat.

17. Un procédé selon l'une quelconque des revendications 8 à 16, selon laquelle les éléments discrets constituent des fibres disposées dans une relation anisotrope.

18. Un procédé selon l'une quelconque des revendications 8 à 17, selon laquelle

le substrat est initialement chauffé à une température d'environ 538°C à 982°C pendant une période de temps suffisante pour stabiliser thermiquement le substrat et

le substrat est ensuite chauffé à une température comprise entre environ 816°C et 2 316°C durant la formation de la matrice par le dépôt de vapeur chimique.

19. Un procédé selon l'une quelconques des revendications 8 à 18, selon laquelle la combinaison du substrat et de la matrice est chauffée à une température comprise entre environ 982°C et 1 760°C durant la formation de la couche imperméable sur la matrice.

20. Un procédé selon l'une quelconque des revendications 8 à 19, selon laquelle les éléments discrets sont formés en un substrat ayant un volume de fibre compris entre environ 5% et environ 65% par rapport au volume du substrat.

21. Un procédé selon l'une quelconque des revendications 8 à 20, selon laquelle le substrat est façonné à une température comprise entre environ 732°C et 1 371°C avant le dépôt de la matrice sur le substrat.

FIG. 1

FIG. 2

FIG. 3

FIG. 4